# EUROPEAN PATENT SPECIFICATION

(11) **EP 3 286 619 B1**
(45) Date of publication and mention of the grant of the patent: **21.08.2024**
(21) Application number: 16730284.3
(22) Date of filing: 03.06.2016
(51) Int. Cl.: G06F 3/01, G06F 1/16, G06V 10/00, G06V 20/60, G09B 21/00, G02B 27/01

(54) **A SCENE IMAGE ANALYSIS MODULE**
SZENENBILDANALYSEMODUL
MODULE D'ANALYSE D'IMAGE D'UNE SCÈNE

(30) Priority: 29.06.2015 EP 15306024
(43) Date of publication of application: 28.02.2018
(73) Proprietor: Essilor International, 94220 Charenton-le-Pont (FR)
(72) Inventor: ROUSSEAU, Denis, 94227 Charenton-le-Pont Cedex (FR); VILLETTE, Thierry, 94227 Charenton-le-Pont Cedex (FR)
(74) Representative: Cabinet Novitech
(86) International application number: PCT/EP2016/062600
(87) International publication number: WO 2017/001146

(56) References cited:
- EP-A2- 2 843 510
- US-A1- 2012 075 168

## Description

### FIELD OF THE INVENTION

The invention relates to an analysis module arranged to generate feedback to a user of a head mounted device based on the analysis of scene images.

The invention further relates to a head mounted device comprising an analysis module according to the invention.

### BACKGROUND OF THE INVENTION

Usually, visually-impaired persons need a visual help and/or an audio help to better apprehend the real world.

A head mounted device may fulfill such requirements.

Document EP 2 843 510 A2 relates to an electronic device, e.g. a wearable device of a watch type or glasses type, capturing an image using a camera module, transmitting information recognized from the captured image to an external electronic device, receiving information associated with the recognized information from the external electronic device, and displaying the received information on a display. An object may be identified in a predetermined-size region of the captured image located adjacent to the region or position where a finger of a user is detected, e.g. a particular object to which the finger points. The recognition information recognized from the captured image may be information associated with a type of an object captured in the image, e.g. additional information if the object is food or a movie, a translation if the object is a text, or a file to be transmitted if the object is a face of a person.

However, actual head mounted devices are not optimized to analyze the environment facing the user of such head mounting device. Indeed, such devices comprise long computing times, extended response time to the user and manual confirmation. Moreover, such devices are not adapted to the user's viewing ability.

Therefore, there is a need to provide a head-mounted device adapted to a user and in particular adapted to automatically analyze scene images facing the user based on identified predefined elements according to the user's viewing ability.

### SUMMARY OF THE INVENTION

To this end, the invention proposes an analysis module as defined in the appended independent claim 1.

Preferred embodiments of the invention are defined in the dependent claims.

Advantageously, the analysis module according to the invention allows a relevant analysis of the environment facing the user of the head mounted device. Indeed, the image analysis component and the feedback component allows an automatic, fast and optimized analysis of the scene images facing the user of a head mounted device based on a predefined element according to the user's needs.

The invention also relates to a head mounted device as defined in the appended claim 13.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below.

In addition, embodiments of the present invention are not described with reference to any particular programming language. It will be appreciated that a variety of programming languages may be used to implement the teachings of the inventions as described herein.

### BRIEF DESCRIPTION OF THE DRAWINGS

Other characteristics and advantages of the invention will become more apparent from the claims and from the following description of some embodiments given by way of example without limitation with reference to the drawings, in which:
- Figure 1 illustrates an embodiment of an analysis module according to the invention,
- Figure 2 represents a schematic scene image corresponding to an image of the environment facing the user of a head mounted device according to the invention when worn by the user,
- Figure 3 represents an embodiment of a head mounted device according to the invention,
- Figure 4 is a networked data-processing device according to the invention, and
- Figure 5 represents a schematic representation of a part of a head mounted device according to a further embodiment of the invention.

### DETAILED DESCRIPTION OF PREFERRED EMBODIMENTS

Elements in the figures are illustrated for simplicity and clarity and have not necessarily been drawn to scale. For example, the dimensions of some of the elements in the figure may be exaggerated relative to other elements to help improve the understanding of the embodiments of the present invention.

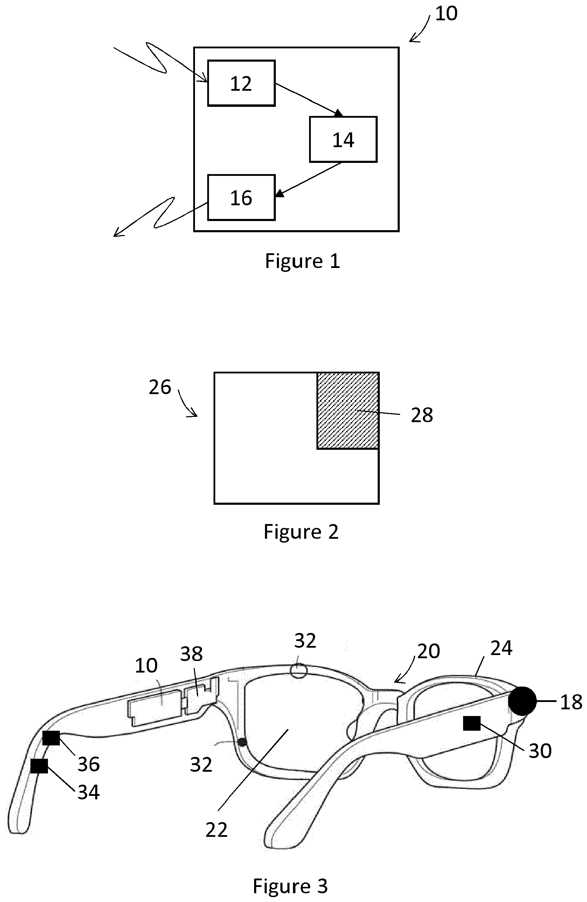

Figure 1 illustrates an analysis module 10 according to the invention. The analysis module 10 comprises a communication component 12, an image analysis component 14 and a feedback component 16.

The communication component 12 is arranged to receive scene images from a scene camera 18 mounted on a head mounted device 20. The scene images correspond to images of the environment facing the user of the head mounted device 20 when worn by the user.

A scene image 26 is divided into at least two zones: a predefined analyzing zone 28 and a zone complementary to the predefined analyzing zone 28. For example, as illustrated in Figure 2, the predefined analyzing zone 28 corresponds to the right upper side of the scene image 26.

The predefined analyzing zone 28 is the same for all the scene images analyzed by the analysis module 10.

According to an embodiment, which is outside the scope of the claims, the predefined analyzing zone 28 may be the whole scene image.

The predefined analyzing zone 28 is a part of the scene image in order to reduce the computing time and to provide a quick response to the user of the head mounted device 20.

The predefined analyzing zone 28 may be adapted to the user of the head mounted device 20.

Moreover, the predefined analyzing zone 28 may be configured by the user of the head mounted device 20. For example, the configuration can be realized by communicating with the head mounted device 20 using a computer connected via Bluetooth. The user may indicate the predefined analyzing zone 28 with a computer mouse, or by entering coordinates, or with an eye tracking device for example. The size and the position of the predefined analyzing zone 28 may therefore be customized by the user of the head mounted device 20. During configuration, an external screen like a computer screen or a television can be used, or a display device mounted on the head mounted device 20. This display device can be removed after configuration, or not used during standard system use, to save battery life and not perturbate standard vision. For example it can be active only when a predefined element has been detected in the predefined analyzing zone 28.

The image analysis component 14 is arranged to identify at least one predefined element from a list of predefined elements in the predefined analyzing zone 28 of the images received from the scene camera 18. The image analysis component 14 is further arranged to analyze at least part of the scene images based on the identified at least one predefined element.

In a preferred embodiment, the image analysis component 14 is arranged to analyze the predefined analyzing zone 28 of the scene images based on the identified at least one predefined element.

The predefined elements may be divided into different categories of predefined elements. For example, the categories of predefined elements may be written characters, human faces, traffic lights or street signs.

Each category of predefined elements may comprise different predefined subelements. For example, the street sign category may comprise a stop sign, a no entry sign, or a crosswalk sign. As a further example, the written character category may be a list of the usual words of a dictionary, or the human face category may comprise the faces of friends and/or acquaintances of the user of the head mounted device. The traffic light category may, for example, comprise one predefined element, a tricolor traffic light.

For each predefined element may correspond an analysis, such as for example text recognition, face recognition, color recognition or sign recognition.

The predefined element may comprise at least written characters. For example, if the user is reading, he places the written characters in the predefined analyzing zone 28 and stops moving his head in order to analyze the scene images. In this case, the analysis of the scene images may comprise at least text recognition. The text recognition may comprise, for example, a detection and/or recognition of the words, spaces, uppercase, punctuation, color of the written characters...

The predefined element may further comprise at least human face. As an example, if the user seems to recognize an acquaintance, he places the human face in the predefined analyzing zone 28 and stops moving his head in order to analyze the scene images. In this case, the analysis of the scene images may further comprise at least face recognition. The face recognition may comprise a detection and/or recognition of the hair color, eyes color, form and edges of the face... in order to compare the results of the automatic face recognition with a predefined face database.

The predefined element may also comprise at least traffic light. Given by way of example, if the user is walking and wants to cross the street, he places the traffic light in the predefined analyzing zone 28 and stops moving his head. In this case, the analysis of the scene images may also comprise at least color recognition. The color recognition may comprise a detection and/or recognition of the green or red color, associated with brightness analysis.

The predefined element may further comprise at least street sign. In this case, the analysis of the scene images may further comprise at least text and/or sign recognition. The sign recognition may comprise a detection and/or recognition of the sign color, sign form, sign pattern... in order to compare the results of the automatic sign recognition with the list of predefined street sign.

In a preferred embodiment, the predefined element comprises at least written characters and human face and traffic light and street sign and the analysis of the scene images comprises at least text recognition and face recognition and color recognition and sign recognition.

The list of predefined elements is obviously not limited to the elements cited above and could comprise other elements.

The predefined element may be an element comprised in a database of elements and/or in a list of elements, or in any possible index of elements.

In a preferred embodiment, the predefined element is comprised in a list of predefined elements.

If the list of predefined elements comprises only one predefined element, the image analysis component 14 may be arranged to identify the predefined element in the predefined analyzing zone 28 of the images received from the scene camera 18. For example, an analysis module 10 may be configured to analyze only written characters, and thus, the user of the head mounted device might use it only when he would like to read.

The list of predefined elements may be stored in a memory comprised in the image analysis component 14 and/or in a distant entity, such a smartphone, a touch pad, a computer or the Internet.

In a preferred embodiment, the list of predefined elements is stored in the image analysis component 14.

Moreover, when the list of predefined elements is not stored in the analysis module 10, the communication component may also be arranged to access to the list of predetermined elements.

The list of predefined elements may also be given and/or completed by the user of the head mounted device 20.

Advantageously, the image analysis component 14 may be arranged to analyze at least part of the scene images upon identification of the at least one predefined element in the predefined analyzing zone 28 over a predefined period of time.

The predefined period of time is defined as the time a user should maintain the predefined element in the predefined analyzing zone 28 without moving his head in order to have the image analysis component 14 to start the analysis of the scene images.

The predefined period of time may be of 2 or 3 seconds. Advantageously, the predefined period of time is greater than or equal to one second.

According to an embodiment of the invention, the image analysis component 14 may be arranged to analyze the whole scene images upon identification of the at least one predefined element in the predefined analyzing zone over the predefined period of time. For example, if the user places the predefined element at the limit of the predefined analyzing zone 28, or if the predefined element exceeds the predefined analyzing zone 28, the image analysis component 14 may analyze the whole scene images.

In a preferred embodiment, the image analysis component 14 is arranged to analyze the predefined analyzing zone of the scene images upon identification of the at least one predefined element in the predefined analyzing zone over the predefined period of time in order to reduce the computing time and to provide quick response to the user of the head mounted device.

The image analysis component may further be arranged to analyze at least part of the scene images upon confirmation from the user of the head mounted device.

The confirmation from the user of the head mounted device 20 may be a vocal confirmation. The vocal confirmation may be a word said by the user of the head mounted device 20. The head mounted device 20 may comprise, for example, a vocal recognition sensor 30. The vocal recognition sensor 30 may be located on the frame 24 of the head mounted device 20, as illustrated on Figure 3.

The confirmation from the user of the head mounted device may further be a manual confirmation. The manual confirmation may be a press from the user of the head mounted device 20 on a button (not shown) placed on the frame 24 of the device.

The confirmation from the user of the head mounted device may also be a visual confirmation. The visual confirmation may be detected by an eye tracking device 32. As an example, an eye tracking device 32 is illustrated on Figure 3. For example, after the display of a virtual confirmation button to the user of the head mounted device, the eye tracking device track eyes movements of the user upon detection that the user is gazing in the direction corresponding to the virtual confirmation button. The virtual confirmation button may be displayed on a display device mounted on the head mounted device 20. The visual confirmation may also be a prolonged eye's blink.

Moreover, the image analysis component 14 may be arranged to analyze the whole scene images upon confirmation from the user of the head mounted device 20.

In a preferred embodiment, the image analysis component 14 is arranged to analyze the predefined analyzing zone 28 of the scene images upon confirmation from the user of the head mounted device 20.

The analysis module 10 further comprises a head movement detection component 34 arranged to detect head movement of the user of the head mounted device 20. The image analysis component 14 is e arranged to analyze at least part of the scene images upon detection of a stabilized head posture of the user.

In another words, when the user of the head mounted device 20 wants to analyze the scene images, he places the predefined element in the predefined analyzing zone 28 and stops moving its head. The head movement detection component 34 detects that a stabilized head posture of the user and sends a signal to the analysis component 10 which analyzes at least part of the scene images.

The head movement detection component 34 can comprise an accelerometer and/or gyroscope and/or compass configured to sense the orientation and position and variation of orientation and position of the module.

The head movement detection component 34 may be placed on the frame 24 of the head mounted device 20, as illustrated on Figure 3.

The analysis module 10 may further comprise an eye tracking device 32 arranged to track eye movements of the user of the head mounted device 20. The image analysis component 14 is arranged to analyze at least part of the scene images upon detection that the user is gazing in a direction corresponding to the predefined analyzing zone 28.

In another words, when the user of the head mounted device 20 wants an analysis of the scene images, he places the predefined element in the predefined analyzing zone 28 and gazes on the direction of the predefined analyzing zone 28 or in any another predetermined zone.

If there is no eye tracking device, only the head positioning can be used to select the predefined zone. In this case the user just needs to verify that in the display device mounted on the head mounted device, the predefined element is placed at the right place. If there is no eye tracking device and no display device, the user must remember the location of the predefined analyzing zone 28 to place the predefined element into. For example, if he wears standard glasses, a small marking on the glasses can help to indicate the predefined analyzing zone 28, like color change or contour indication of the zone. In this case the glasses must be positioned correctly on user's head, just like during the predefined analyzing zone configuration stage.

With an eye tracking device, there is not necessarily a display device on the head mounted device.

The eye tracking device 32 detects that the user is gazing in a direction corresponding to the predefined analyzing zone 28 or corresponding to any another predetermined zone. Then the eye tracking device 32 sends a signal to the analysis component 10 to analyze at least part of the scene images.

Moreover, the eye tracking device 32 can send a signal to the analysis component 10 when the user places the predefined element in the predefined analyzing zone 28 and gazes in the direction corresponding to the predefined analyzing zone 28 without moving his head during at least a predefined period of time. The predefined period of time may be more than one second. For example, the predefined period of time may be 2 or 3 seconds.

The eye tracking device 32 may also be combined with mirrors and/or prims in order to obtain an optical path for the eye tracking orthogonal to the pupil of the user.

Moreover, the eye tracking information may be averaged and dampened in order to minimize the sensitivity to random eye movements and/or blinks.

The head mounted device may also comprise one eye tracking device 32 for each eye of the user.

The feedback component 16 is arranged to generate feedback data based on the analysis of at least part of the scene images and to send such data to the user of the head mounted device 20.

The feedback component may be arranged to provide a visual feedback to the user by applying an image processing on the scene images received from scene camera 18 of the head mounted device 20.

The image processing may preferably be selected in the list comprising: magnifying, edge enhancing, color remapping, text recognition, pattern recognition, contrast enhancement and brightness enhancement.

In another words, the visual feedback provided to the user can be an image of the scene images customized according to the visual behavior of the user. For example, for a color-blinded user, the improved image can be an image with color remapping, or for a short-sighted user, the improved image can be a zoom on the predefined analyzing zone 24 of the scene images.

The visual feedback data can also be a text. For example, for a short-sighted user, if the user is walking and wants an analysis of a street sign, the visual feedback can be a zoom on the text written on the street sign.

The visual feedback may be provided on a display device mounted on the head mounted device 20.

The head mounted device 20 may also comprise one display device for each eye of the user. In this case, the visual feedback may be provided to the user on the two display devices of the head mounted device.

In a preferred embodiment, the visual feedback is provided to the user in the predefined analyzing zone 28.

The visual feedback can be done on the full display for zoom operation, or other processing that can improve feedback effect, like text display with more readable fonts and/or colors.

The feedback component may further be arranged to provide an audio feedback to the user.

For example, if the user is reading a book, the audio feedback can be an audio sound corresponding to the book. Moreover, for a color-blinded user, if the user is looking at traffic lights, the audio feedback can be a sentence such as "the light is green" or "the light is red".

The audio feedback can be provided through an earphone, a speaker, a headset or any possible audio output device. Advantageously, the audio output device 36 is located on the frame 24 of the head mounted device 20, as illustrated on Figure 3. The audio output device 36 may also be located in the ear of the user.

In a preferred embodiment, the audio output device 36 is located the closest possible to the user's ear.

The feedback data may also depend on the predefined element and on the user. Indeed, for example, a color-blinded user may prefer an audio feedback rather than a visual when the predefined element is a traffic light. As a further example, a user which is reading may prefer a visual feedback, such as a zoom on the scene image, rather than an audio feedback.

A simple LED feedback can also be done with LED elements (not shown) positioned on the frame, for example on both sides for color-blind user, or a single multi-color LED for other users.

Moreover, the feedback component 16 can be arranged to generate feedback data based on the analysis of the whole scene images and to send such data to the user of the head mounted device 20.

In a preferred embodiment, the feedback component 16 is arranged to generate feedback data based on the analysis of the predefined analyzing zone 28 of the scene images and to send such data to the user of the head mounted device 20.

Furthermore, the communication component 12 may be arranged to receive scene images in real time, the image analysis component 14 may be arranged to identify at least one predefined element and analyze at least part of the scene images in real time and the feedback component 16 may be arranged to generate and send feedback data in real time.

In the sense of the invention, the "real time" is when the time between the scene images reception by the communication component 12 of the analysis module 10 and the feedback generation by the feedback component 16 of the analysis module 10 is less than one second, for example less than 200ms.

Advantageously, a 4 time ratio between the predefined period of time and the real time provides good results. For example the predefined period of time during which the user should gaze the analyzing zone 28 may be 2 seconds and the time during which the analysis module may receive and analyze the image scene and generate feedback data may be 500ms.

A head mounted device according to an embodiment of the invention will now be described.

Figure 3 represents an example of a head mounted device 20 according to the invention. The head mounted device comprises a frame 34 adapted to be worn on the head of a user, a scene camera 18 fixed to the frame 24 and a communication unit 38.

The head mounted device 20 represented on Figure 3 also comprises two lenses 22, vocal recognition sensor 30, an eye tracking device 32, a head movement detection component 34 and an audio output device 36, directed at the left side of the wearer's head (not shown).

The scene camera 18 is adapted to acquire scene images of the environment facing the user when the head mounted device 20 is being worn.

Advantageously, the scene camera 18 is located on the frame 24 of the head mounted device 20. More precisely, the scene camera 18 may be located between the eyes of the user or may be located on a side of the head mounted device 20, in order to acquire scene images corresponding to the environment seen by one eye of a user. For example, if the scene camera is located on the right side of the frame 24, the environment corresponding to the scene images seen by the right eye of the user are acquired.

The scene camera 18 may comprise a charged coupled device (CCD) image sensor, a complementary metal oxide semiconductor (CMOS) image sensor, or any other image sensor with an analog or digital signal output that can be sent to the communication component 12.

The head mounted device may also comprise one scene camera for each eye of the user. In this case, each scene camera may be located on a side of the frame in order to acquire scene images seen by both eyes of the user of the head mounted device.

The lenses 22 of the head mounted device may be spectacle lenses or spectacle glasses. The lenses 22 may correspond to the optical prescription of the user.

The lenses 22 may also be active lenses with an optical function which can be adapted to the user's needs.

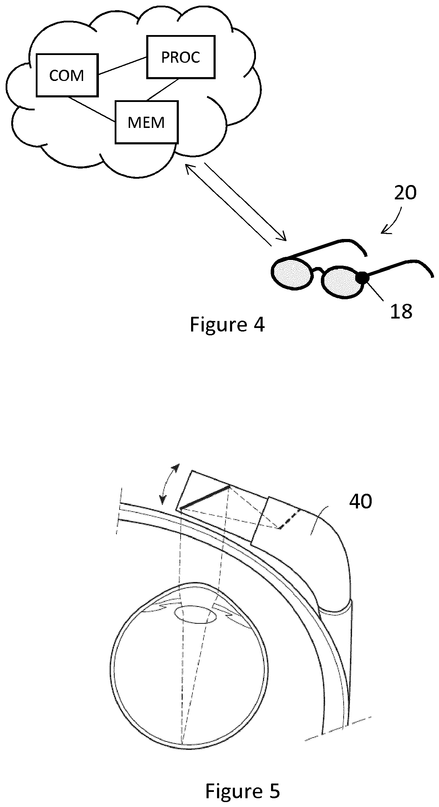

The head mounted device 20 may also comprise a display device 40. An example of display device 40 is represented on Figure 5. The display device allows the wearer to see both virtual images and/or texts and the real world through it. The display device 40 can be divided into two zones, a zone for the virtual image and/or text and a zone for the real world.

The display device 40 is able to display images and/or texts. An electronic driving system (memory + processor, not shown) sends to the display device 40 the image and/or text to display. Preferably it is able to display image and/or text in different viewing directions.

By way of example, the display device 40 may be a liquid crystal display, or use liquid crystal on silicon technology or organic light emitting diode technology, associated with a light guide, that can be transparent or semi-transparent.

The communication unit 38 is arranged to send the scene images to an analysis module 10 according to the invention. The communication unit 38 will be described more precisely latter in the description.

The head mounted device 20 may further comprise an analysis module 10 according to the invention, as illustrated on Figure 3.

The head mounted device 20 may comprise an output device arranged to output a signal to the user based on the feedback data sent by the feedback component 16.

The output device may be a display device and/or an audio output device. As represented on Figure 3, the head mounted device comprises a display device 40 and an audio output device 36.

Although not represented, the head mounted device 20 may further comprise a power source, for example a battery and/or other electronics.

In a preferred embodiment, the components and/or devices of the head mounted device 20 are arranged so that the weight of the head mounted device 20 may be substantially equal on each side of the frame 24. For example, all the components and/or devices of the head mounted device 20 can be in the left side of the frame 24 when the power source is located on the right side of the frame 24.

According to an embodiment of the invention, illustrated on Figure 4, the head mounted device 20 communicates with a distant entity that comprises an analysis module 10.

Communication can be done through different communication devices and protocols, like Bluetooth, Zigbee, WiFi or others.

For example, the communication unit 38 may be configured to communicate with the distant entity either to store the analysis of at least part of the scene images in a memory MEM or to provide a feedback data based on the analysis of the at least part of the scene images corresponding to images of the environment facing the user of the head mounted device 20.

Typically, the distant entity comprises a communication unit COM configured to communicate at least with the head mounted device 20, a memory MEM, at least one processor PROC and program instructions stored on a non-transitory computer-readable medium and executable by the at least one processor to generate a feedback data based on the analysis of the at least part of the scene images corresponding to images of the environment facing the user of the head mounted device 20.

The distant entity can include different computing objects such as personal digital assistants, audio/video devices, mobile phones, MPEG-1 Audio Layer 3 (MP3) players, personal computers, laptops, tablets, Bluetooth headset, watch, wristband, etc...

In a network environment in which the communications network/bus can be the Internet, the computing objects can be Web servers, file servers, media servers, etc. with which the client computing objects or devices communicate via any of a number of known protocols, such as the hypertext transfer protocol (HTTP).

The invention has been described above with the aid of embodiments without limitation of the general inventive concept. Moreover, the embodiments of the invention may be combined without any restriction.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An analysis module (10) comprising:
- a communication component (12) arranged to receive scene images from a scene camera (18) mounted on a head mounted device (20), the scene images corresponding to images of the environment facing the user of the head mounted device (20) when worn by the user,
- an image analysis component (14) arranged to identify at least one predefined element from a list of predefined elements in a predefined analyzing zone (28) of the scene images received from the scene camera (18), the predefined analyzing zone being a same part of each scene image, smaller than the whole scene image, and to analyze at least part of the scene images based on the identified at least one predefined element,
- a head movement detection component (34) arranged to detect head movement of the user of the head mounted device (20) and wherein the image analysis component (14) being arranged to analyze at least part of the scene images comprises being arranged to analyze at least part of the scene images upon detection of a stabilized head posture of the user, and
- a feedback component (16) arranged to generate feedback data based on the analyze of at least part of the scene images and to provide such data to the user of the head mounted device (20).

2. The analysis module (10) according to claim 1, wherein the communication component (12) is arranged to receive scene images in real time, the image analysis component (14) is arranged to identify at least one predefined element and analyze at least part of the scene images in real time and the feedback component (16) is arranged to generate and send feedback data in real time.

3. The analysis module (10) according to claim 1 or 2, wherein the image analysis component (14) being arranged to analyze at least part of the scene images comprises being arranged to analyze at least part of the scene images upon identification of the at least one predefined element in the predefined analyzing zone (28) over a predefined period of time.

4. The analysis module (10) according to any of the preceding claims, wherein the image analysis component (14) being arranged to analyze at least part of the scene images comprises being arranged to analyze at least part of the scene images upon confirmation from the user of the head mounted device (20).

5. The analysis module (10) according to any of the preceding claims, further comprising an eye tracking device (32) arranged to track eye movements of the user of the head mounted device (20) and wherein the image analysis component (14) being arranged to analyze at least part of the scene images comprises being arranged to analyze at least part of the scene images upon detection that the user is gazing in a direction corresponding to the predefined analyzing zone (28).

6. The analysis module (10) according to any of the preceding claims, wherein the predefined element comprises at least written characters and the analysis of the scene images comprises at least text recognition.

7. The analysis module (10) according to any of the preceding claims, wherein the predefined element comprises at least human face and the analysis of the scene images comprises at least face recognition.

8. The analysis module (10) according to any of the preceding claims, wherein the predefined element comprises at least traffic light and the analysis of the scene images comprises at least color recognition.

9. The analysis module (10) according to any of the preceding claims, wherein the predefined element comprises at least street sign and the analysis of the scene images comprises at least text and/or sign recognition.

10. The analysis module (10) according to any of the preceding claims, wherein the feedback component (16) is arranged to provide a visual feedback to the user by applying an image processing on the scene images received from scene camera (18) of the head mounted device (20).

11. The analysis module (10) according to the preceding claim, wherein the image processing is selected in the list comprising: magnifying, edge enhancing, color remapping, text recognition, pattern recognition, contrast enhancement and brightness enhancement.

12. The analysis module (10) according to any of the preceding claims, wherein the feedback component (16) is arranged to provide an audio feedback to the user.

13. A head mounted device (20) comprising:
- a frame (24) adapted to be worn on the head of a user,
- a scene camera (18) fixed to the frame (24) and adapted to acquire scene images of the environment facing the user when the head mounted device (20) is being worn,
- an analysis module (10) according to any of claims 1 to 12, and
- a communication unit (38) arranged to send the scene images to the analysis module (10).

## Patentansprüche

1. Analysemodul (10), umfassend:
- eine Kommunikationskomponente (12), die ausgelegt ist zum Empfangen von Szenenbildern von einer Szenenkamera (18), die an einer kopfmontierten Vorrichtung (20) angebracht ist, wobei die Szenenbilder Bildern der dem Benutzer der kopfmontierten Vorrichtung (20) zugewandten Umgebung entsprechen, wenn diese vom Benutzer getragen wird,
- eine Bildanalysekomponente (14), die ausgelegt ist zum Identifizieren mindestens eines vordefinierten Elements aus einer Liste von vordefinierten Elementen in einer vordefinierten Analysezone (28) der von der Szenenkamera (18) empfangenen Szenenbilder, wobei die vordefinierte Analysezone ein gleicher Teil jedes Szenenbildes ist, der kleiner ist als das gesamte Szenenbild, und zum Analysieren mindestens eines Teils der Szenenbilder basierend auf dem identifizierten mindestens einen vordefinierten Element,
- eine Kopfbewegung-Detektionskomponente (34), die ausgelegt ist zum Detektieren der Kopfbewegung des Benutzers der kopfmontierten Vorrichtung (20), und wobei die Auslegung der Bildanalysekomponente (14) zum Analysieren eines Teils der Szenenbilder umfasst, dass sie dafür ausgelegt ist, bei Detektion einer stabilisierten Kopfhaltung des Benutzers mindestens einen Teil der Szenenbilder zu analysieren, und
- eine Rückmeldungskomponente (16) ausgelegt ist zum Erzeugen von Rückmeldedaten basierend auf der Analyse von mindestens einem Teil der Szenenbilder und Bereitstellen derartiger Daten an den Benutzer der kopfmontierten Vorrichtung (20).

2. Analysemodul (10) gemäß Anspruch 1, wobei die Kommunikationskomponente (12) ausgelegt ist zum Empfangen von Szenenbildern in Echtzeit, die Bildanalysekomponente (14) ausgelegt ist zum Identifizieren mindestens eines vordefinierten Elements und Analysieren mindestens eines Teils der Szenenbilder in Echtzeit und die Rückmeldungskomponente (16) ausgelegt ist zum Erzeugen und Zurücksenden von Rückmeldeinformationen in Echtzeit.

3. Analysemodul (10) gemäß Anspruch 1 oder 2, wobei die Auslegung der Bildanalysekomponente (14) zum Analysieren eines Teils der Szenenbilder umfasst, dass sie dafür ausgelegt ist, bei Identifikation des mindestens einen vordefinierten Elements in der vordefinierten Analysezone (28) mindestens einen Teil der Szenenbilder über eine vordefinierte Zeitdauer zu analysieren.

4. Analysemodul (10) gemäß einem der vorstehenden Ansprüche, wobei die Auslegung der Bildanalysekomponente (14) zum Analysieren eines Teils der Szenenbilder umfasst, dass sie dafür ausgelegt ist, bei Bestätigung vom Benutzer der kopfmontierten Vorrichtung (20) mindestens einen Teil der Szenenbilder zu analysieren.

5. Analysemodul (10) gemäß einem der vorstehenden Ansprüche, ferner eine Vorrichtung zur Verfolgung der Augen (32) umfassend, die ausgelegt ist zum Verfolgen der Augenbewegung des Benutzers der kopfmontierten Vorrichtung (20), und wobei die Auslegung der Bildanalysekomponente (14) zum Analysieren eines Teils der Szenenbilder umfasst, dass sie dafür ausgelegt ist, bei Detektion, dass der Benutzer in eine Richtung entsprechend der vordefinierten Analysezone (28) blickt, mindestens einen Teil der Szenenbilder zu analysieren.

6. Analysemodul (10) gemäß einem der vorstehenden Ansprüche, wobei das vordefinierte Element mindestens geschriebene Zeichen umfasst und die Analyse der Szenenbilder mindestens Texterkennung umfasst.

7. Analysemodul (10) gemäß einem der vorstehenden Ansprüche, wobei das vordefinierte Element mindestens ein menschliches Gesicht umfasst und die Analyse der Szenenbilder mindestens Gesichtserkennung umfasst.

8. Analysemodul (10) gemäß einem der vorstehenden Ansprüche, wobei das vordefinierte Element mindestens eine Verkehrsampel umfasst und die Analyse der Szenenbilder mindestens Farberkennung umfasst.

9. Analysemodul (10) gemäß einem der vorstehenden Ansprüche, wobei das vordefinierte Element mindestens ein Straßenschild umfasst und die Analyse der Szenenbilder mindestens Text- und/oder Zeichenerkennung umfasst.

10. Analysemodul (10) gemäß einem der vorstehenden Ansprüche, wobei die Rückmeldungskomponente (16) dafür ausgelegt ist, dem Benutzer eine visuelle Rückmeldung bereitzustellen, indem sie eine Bildverarbeitung auf die von der Szenenkamera (18) der kopfmontierten Vorrichtung (20) empfangenen Szenenbilder anwendet.

11. Analysemodul (10) gemäß dem vorstehenden Anspruch, wobei die Bildverarbeitung aus der Liste ausgewählt wird, die umfasst: Vergrößerung, Kantenverbesserung, Farbmanagement, Texterkennung, Mustererkennung, Kontrastverbesserung und Helligkeitsverbesserung.

12. Analysemodul (10) gemäß einem der vorstehenden Ansprüche, wobei die Rückmeldekomponente (16) dafür ausgelegt ist, dem Benutzer eine akustische Rückmeldung bereitzustellen.

13. Kopfmontierte Vorrichtung (20), umfassend:
- ein Gestell (24), das dafür ausgelegt ist, auf dem Kopf eines Benutzers getragen zu werden,
- eine Szenenkamera (18), die an dem Gestell (24) befestigt und dafür ausgelegt ist, Szenenbilder der dem Benutzer zugewandten Umgebung zu erfassen, wenn die kopfmontierte Vorrichtung (20) getragen wird,
- ein Analysemodul (10) gemäß einem der Ansprüche 1 bis 12 und
- eine Kommunikationseinheit (38), die dafür ausgelegt ist, die Szenenbilder an das Analysemodul (10) zu senden.

## Revendications

1. Module d'analyse (10) comprenant :
- un composant de communication (12) agencé pour recevoir des images de scène en provenance d'une caméra de prise de vues de scène (18) montée sur un dispositif monté sur la tête (20), les images de scène correspondant à des images de l'environnement faisant face à l'utilisateur du dispositif monté sur la tête (20) lorsqu'il est porté par l'utilisateur,
- un composant d'analyse d'image (14) agencé pour identifier au moins un élément prédéfini à partir d'une liste d'éléments prédéfinis dans une zone d'analyse prédéfinie (28) des images de scène reçues de la caméra de prise de vues de scène (18), la zone d'analyse prédéfinie étant une même partie de chaque image de scène, plus petite que l'image de scène entière, et pour analyser au moins une partie des images de scène sur la base de l'identification d'au moins un élément prédéfini,
- un composant de détection de mouvement de la tête (34) agencé pour détecter le mouvement de la tête de l'utilisateur du dispositif monté sur la tête (20), et le composant d'analyse d'image (14) agencé pour analyser au moins une partie des images de la scène comprenant le fait d'être agencé pour analyser au moins une partie des images de la scène lors de la détection d'une position stabilisée de la tête de l'utilisateur, et
- un composant de rétroaction (16) agencé pour générer des données de rétroaction sur la base de l'analyse d'au moins une partie des images de la scène et pour fournir ces données à l'utilisateur du dispositif monté sur la tête (20).

2. Module d'analyse (10) selon la revendication 1, le composant de communication (12) étant agencé pour recevoir des images de la scène en temps réel, le composant d'analyse d'image (14) étant agencé pour identifier au moins un élément prédéfini et analyser au moins une partie des images de la scène en temps réel, et le composant de rétroaction (16) étant agencé pour générer et envoyer des données de rétroaction en temps réel.

3. Module d'analyse (10) selon la revendication 1 ou 2, le composant d'analyse d'image (14) agencé pour analyser au moins une partie des images de la scène comprenant le fait d'être agencé pour analyser l'au moins une partie des images de la scène lors de l'identification d'au moins un élément prédéfini dans la zone d'analyse prédéfinie (28) pendant une période de temps prédéfinie.

4. Module d'analyse (10) selon l'une quelconque des revendications précédentes, le composant d'analyse d'image (14) agencé pour analyser au moins une partie des images de la scène comprenant le fait d'être agencé pour analyser au moins une partie des images de la scène lors de la confirmation de l'utilisateur du dispositif monté sur la tête (20).

5. Module d'analyse (10) selon l'une quelconque des revendications précédentes, comprenant en outre un dispositif de suivi des yeux (32) agencé pour suivre les mouvements des yeux de l'utilisateur du dispositif monté sur la tête (20), et le composant d'analyse d'image (14) agencé pour analyser au moins une partie des images de la scène comprenant le fait d'être agencé pour analyser au moins une partie des images de la scène lors de la détection que l'utilisateur regarde dans une direction correspondant à la zone d'analyse prédéfinie (28).

6. Module d'analyse (10) selon l'une quelconque des revendications précédentes, l'élément prédéfini comprenant au moins des caractères écrits et l'analyse des images de la scène comprenant au moins la reconnaissance de texte.

7. Module d'analyse (10) selon l'une quelconque des revendications précédentes, l'élément prédéfini comprenant au moins un visage humain et l'analyse des images de la scène comprenant au moins une reconnaissance de visage.

8. Module d'analyse (10) selon l'une quelconque des revendications précédentes, l'élément prédéfini comprenant au moins un feu de circulation et l'analyse des images de la scène comprenant au moins la reconnaissance des couleurs.

9. Module d'analyse (10) selon l'une quelconque des revendications précédentes, l'élément prédéfini comprenant au moins une plaque de rue et l'analyse des images de la scène comprenant au moins une reconnaissance de texte et/ou de signe.

10. Module d'analyse (10) selon l'une quelconque des revendications précédentes, le composant de rétroaction (16) étant agencé pour fournir une rétroaction visuelle à l'utilisateur en appliquant un traitement d'image sur les images de scène reçues en provenance de la caméra de prise de vues de scène (18) du dispositif monté sur la tête (20).

11. Module d'analyse (10) selon la revendication précédente, le traitement d'image étant sélectionné dans la liste comprenant : l'agrandissement, l'amélioration des bords, le remappage des couleurs, la reconnaissance de texte, la reconnaissance des formes, l'amélioration du contraste et l'amélioration de la luminosité.

12. Module d'analyse (10) selon l'une quelconque des revendications précédentes, le composant de rétroaction (16) étant agencé pour fournir une rétroaction audio à l'utilisateur.

13. Dispositif monté sur la tête (20) comprenant :
- un cadre (24) adapté pour être porté sur la tête d'un utilisateur,
- une caméra de prise de vues de scène (18) fixée au cadre (24) et adaptée pour acquérir des images de scène de l'environnement faisant face à l'utilisateur lorsque le dispositif monté sur la tête (20) est porté,
- un module d'analyse (10) selon l'une quelconque des revendications 1 à 12, et
- une unité de communication (38) agencée pour envoyer les images de la scène au module d'analyse (10).
